## Europäisches Patentamt

## European Patent Office

## Office européen des brevets

(11) Publication number: **0 141 443**

**A1**

(12) # EUROPEAN PATENT APPLICATION

(21) Application number: **84201283.3**

(22) Date of filing: **07.09.84**

(51) Int. Cl.⁴: **H 05 B 37/02**

(30) Priority: **13.09.83 ES 525582**

(43) Date of publication of application:
**15.05.85 Bulletin 85/20**

(84) Designated Contracting States:
**AT BE CH DE FR GB IT LI LU NL SE**

(71) Applicant: **Sociedad Espanola de Construcciones Eléctricas, S.A.**
**Plaza Catalunya, 9**
**Barcelona(ES)**

(72) Inventor: **Roig Cunill, Manuel**
**rue Rubio i Ors, 166**
**Cornella De Llobregat (Barcelona)(ES)**

(74) Representative: **Pirson, Jean et al,**
**c/o Bureau Gevers, S.A. rue de Livourne, 7 bte 1**
**B-1050 Brussels(BE)**

(54) **Improvements in electric systems for automatically connecting and/or disconnecting electric circuits, specially in lighting.**

(57) Improvements in electronic systems for automatic connection and/or disconnection of electric circuits, specially in lighting, characterized by comprising two modules, a programming module and a basic module, said programming module including a) a keyboard (1) through which the data are introduced in the basic module, b) an alphanumeric display (2) in which are shown the data requests and the introduced values, c) an interface/drive (3) of the display for connection thereof to the basic module with the corresponding decodifier, said basic module including A) a microprocessor (4) consisting of a central processing unit, a random access memory and a read-only memory that performs the task of carrying out the program contained in the latter, calculating the connection/disconnection according to instructions introduced and stored in the other memory, B) a timebase (5) controlled by a quartz crytsal which generates oscillations in square wave and frequency for measurement of the time elapsed, C) an output exciter (6) actuated by said central unit of said microprocessor that acts upon an independent relay in an output circuit of astronomic programming which follows the solar curves of sunrises and sunsets according to the graphic coordinates of the place of installation and to the time of the year, and D) a series of voluntary programming output exciters which, by each one acting upon an independent relay, allow daily and seasonal adjustements.

./...

"Improvements in electric systems for automatically connecting and/or disconnecting electric circuits, specially in lighting."

As indicated in the title, this invention refers to improvements in systems for automatically connecting and/or disconnecting electric circuits in general, specially in lighting.

These improvements comprise two modules, a programming module and a basic module. The programming module includes : a) a keyboard by which the data are introduced in the basic module, b) an alphanumeric display showing the data requests and introduced values, c) an interface/driver of the display for connecting it to the basic module with the corresponding encoder. The basic module for its part comprises : A) a microprocessor consisting of a central processing unit, a random access memory and a read-only memory, the task of which is to carry out the program contained in the latter, calculating the connection/disconnection according to the instructions introduced and stored in the other memory; B) a timebase controlled by quartz crystal which generates oscillations in square wave and at frequency for measuring the time elapsed; C) an output exciter actuated by the central unit of astronomic programming which follows the solar curves of sun-

0141443

rises and sunsets according to the geographic coordinates of the site of installation and to the time of the year; and D) a series of output exciters of voluntary programming, each one of which acts on an independent relay and allows daily and seasonal adjustments.

The basic module is provided with energetic feeding from the network, there being provided an autonomous energy supply to forestall a stoppage in said network feeding.

The programming module and the basic module are preferably interconnected only when data are introduced into the microprocessor, it being possible to thereafter remove the programming module.

The daily and seasonal adjustments for the series of output exciters of voluntary programming include the repetitive programs, the programs repetitive only from Monday to Friday, and the specific programs for each day of the week.

In the programming of connection and/or disconnection operations, it is possible to take into account the previously introduced special holidays in order to alter the initially contemplated program.

It is possible to program the days of official change of seasonal time, as well as the amount of the change.

For a better understanding of the foregoing, reference is made herebelow to the sheet of drawings which forms part of this specification and claims and which, considering its explanatory nature, must be regarded as in no manner limiting the scope of the invention proper.

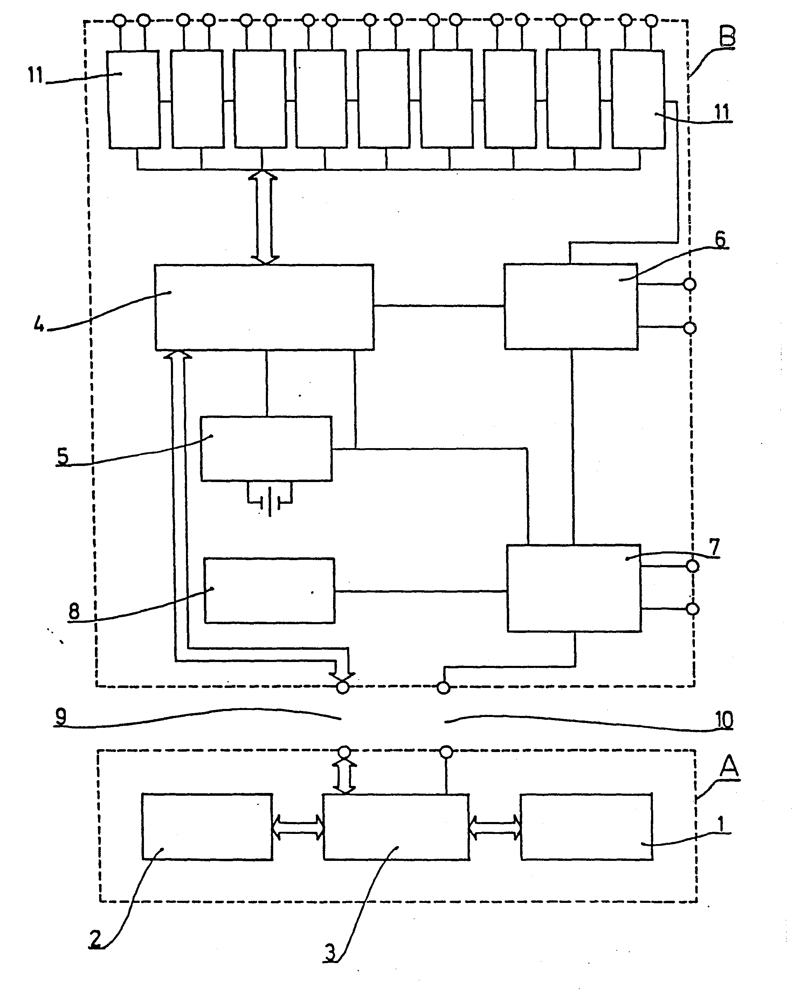

The drawing shows a diagram in which both the modules and the different parts or components thereof are conventionally represented.

The rectangular outlines in the drawing indicate the modules : the programming module, A, and the basic module, B.

In the programming module A there is indicated the keyboard 1, the alphanumeric display 2, and the interface/driver 3 of the display.

In the basic module B there is indicated the microprocessor 4 comprised of a central processing unit (CPU), a random access memory (RAM) and a read-only memory (ROM); the timebase 5 which is controlled by a quartz crystal, which generates one or more oscillations in square wave and at convenient frequency, the output 6, the feeding source 7 connected to the network, and the battery or autonomous supply source 8.

In the module B there is provided the series of outputs 11, which in the case of the example are nine.

The interconnection is indicated by the reference numerals 9 and 10, connecting the programming module A and the basic module B.

Having briefly described the different devices and elements that constitute the improved system according to this invention, it is of interest to explain the operation and effects thereof, which is done herebelow with reference to a specific use in the automatic conncection/ disconnection in a public lighting installation.

For the system to start operating it is necessary to introduce the following programming data :

I. For astronomic programming :
1. Geographic latitude of the place,
2. Geographic longitude of the place,
3. Time difference in respect to Greenwich,
4. Correction of the astronomic sunrise,
5. Correction of the astronomic sunset,

II. For voluntary programming :
6. Number of the circuit sought to be programmed,
7. Type of programming according to whether it is daily, specific for each day, or daily except for Saturdays and Sundays,
8. Hour of connection, several per circuit,
9. Hour of disconnection, several per circuit,
10. Programming for single days.

III. For change of seasonal time :
11. Month and day of change in spring,
12. Amount of the change,
13. Month and day of change in autumn,
14. Amount of the change.

IV. For setting date and hour :
15. Current year,
16. Month and day of the month,
17. Day of the week,
18. Current hour.

0141443

With said data the system starts operating as follows :

With data 1, 2 and 3 and the algorithms contained in the program of the ROM memory, the microprocessor elaborates a table of hours of connection and disconnection in relation to the sunrises and sunsets of the place.

If datum 3 is zero, the times of connection and disconnection of the voluntary programming circuits, the same as the current time, must be introduced in Greenwich mean time (GMT) and in case the value of datum 3 exactly corresponds to the time difference in respect to Greenwich, the connection and disconnection hours can be introduced in the official time of the country.

With data 4 and 5 the microprocessor effects the correction in the calculated astronomic time of connection and disconnection, both in the sense of advancing and receding, without limitation of the magnitude and independently of the connection or disconnection.

This correction is useful for adapting the system to the peculiar conditions of the site of installation within the same location, for example, and in case of an urban location, in narrower streets where it may be convenient to anticipate the connection and delay the disconnection, or in both streets oriented in East/West direction where the opposite correction may be advised.

For other uses, such as actuating

0141443

energy conversion circuits in solar panels, it may be necessary during the whole year to actuate certain circuits several hours after sunrise and prior to sunset.

With data 6, 7, 8 and 9 one or several connections and disconnections, whether daily, specific for each day of the week, or repetitive only from Monday to Friday, are effected in accordance with the programming data previously introduced.

With datum 10 there is effected on the voluntary programming circuits a correction whereby said programming is altered or cancelled on the days introduced as single holidays.

With data 11, 12, 13 and 14 there is automatically effected on the date programmed the change of official time of the country, adjusting all the voluntary programmings to the new time.

In the case of astronomic programming said data affect only the time difference that is automatically adjusted to the new time.

With data 15, 16, 17 and 18 the internal clock is set at the date and hour that enable the microprocessor to effect the comparisons between the programmed data and the actual time and thus to generate the orders for connection and disconnection to the exit circuits of the basic module.

The operation and effects have really been indicated already with what has been said above :

a) one circuit is capable of carrying out an astronomic program in accordance with the sunrises and sunsets in any part of the world and the remaining circuits can be voluntarily programmed with several connections and disconnections per day,

b) in the astronomic programming circuit there can be included an adjustment of the time of connection and disconnection, advancing or receding it and without limitations of magnitude,

c) the voluntary programming circuits can be actuated by a daily and repetitive program, by a repetitive program from Monday to Friday, or by a specific program for each day of the week,

d) in the programming of connection and/or disconnection operations, the previously introduced single holidays can be taken into account for altering the initially contemplated program,

e) it is possible to program the days of official change of seasonal time, the same as the amount of the change.

What has been set forth, however, must constitute no obstacle for changing or modifying in the improved system according to this invention the conditions expressed, provided this does not alter or modify the essence of the invention, which is specified in the following claims.

## CLAIMS.

1. Improvements in electronic systems for automatic connection and/or disconnection of electric circuits, specially in lighting, characterized by comprising two modules, a programming module and a basic module, said programming module including a) a keyboard (1) through which the data are introduced in the basic module, b) an alphanumeric display (2) in which are shown the data requests and the introduced values, c) an interface/driver (3) of the display for connection thereof to the basic module with the corresponding decodifier, said basic module including A) a microprocessor (4) consisting of a central processing unit, a random access memory and a read-only memory that performs the task of carrying out the program contained in the latter, calculating the connection/disconnection according to instructions introduced and stored in the other memory, B) a timebase (5) controlled by a quartz crystal which generates oscillations in square wave and frequency for measurement of the time elapsed, C) an output exciter (6) actuated by said central unit of said microprocessor that acts upon an independent relay in an output circuit of astronomic programming which follows the solar curves of sunrises and sunsets according to the graphic coordinates of the place of installation and to the time of the year, and D) a series of voluntary programming output exciters which, by each one acting upon an independent relay, allow daily and seasonal adjustments.

2. Improvements in electronic systems for automatic connection and/or disconnection of electric circuits, specially in lighting, according to the preceding claim, characterized in that said basic module is provided with energy feeding from the network, there being provided an autonomous energy supply in the event of stoppage of the main current.

3. Improvements in electronic systems for automatic connection and/or disconnection of electric circuits , specially lighting, according to the preceding claims, characterized in that said programming module and said basic module are preferably interconnected only upon introduction of the data in said microprocessor, said programming module being susceptible to removal thereafter.

4. Improvements in electronic systems for automatic connection and/or disconnection of electronic circuits, specially in lighting, according to claim 1, characterized in that the daily and seasonal alterations for the series of output exciters of voluntary programming include the daily and repetitive programs, the repetitive programs from Monday to Friday, and the specific programs for each day of the week.

5. Improvements in electronic systems for automatic connection and/or disconnection of electric circuits, specially in lighting, according to claim 1, characterized in that it is possible, in the programming of connection and/or disconnection, to take into account the previously introduced single holidays for altering the initially contemplated

0141443

program.

6. Improvements in electronic systems for automatic connection and/or disconnection of electronic circuits, specially by lighting, according to the preceding claims, characterized in that it is possible to program the days of official change of seasonal time, as well as the amount of the change.

European Patent
Office

**EUROPEAN SEARCH REPORT**

0141443
Application number

EP 84 20 1283

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 358 715 (DINGES)<br>* Column 4, line 10 - column 6, line 7; figure 1 * | 1-6 | H 05 B 37/02 |
| | --- | | |
| Y | US-A-4 396 872 (NUTTER)<br>* Column 4, line 65 - column 8, line 59; figures 1,2 * | 1-6 | |
| | ----- | | |

**TECHNICAL FIELDS SEARCHED (Int. Cl.4)**

H 05 B 37/00
H 05 B 35/00
H 05 B 39/00

The present search report has been drawn up for all claims

| Place of search | Date of completion of the search | Examiner |
|---|---|---|
| THE HAGUE | 28-10-1984 | DUCHEYNE R.C.L. |